# EUROPEAN PATENT APPLICATION

(11) **EP 4 438 772 A1**
(43) Date of publication of application: **02.10.2024**
(21) Application number: 22898574.3
(22) Date of filing: 22.11.2022
(51) Int. Cl.: C25B 11/054, B01J 23/46, B01J 23/62, C01B 13/02, C25B 1/04, C25B 9/00, C25B 9/23, C25B 11/037, C25B 11/052, C25B 11/067, C25B 11/081

(54) **ELECTRODE CATALYST AND WATER ELECTROLYSIS CELL**

(30) Priority: 26.11.2021 JP 2021191777
(71) Applicant: University of Yamanashi, Kofu-shi, Yamanashi 400-8510 (JP)
(72) Inventor: KAKINUMA, Katsuyoshi, Kofu-shi, Yamanashi 400-8510 (JP); UCHIDA, Makoto, Kofu-shi, Yamanashi 400-8510 (JP); IIYAMA, Akihiro, Kofu-shi, Yamanashi 400-8510 (JP)
(74) Representative: Gulde & Partner
(86) International application number: PCT/JP2022/043188
(87) International publication number: WO 2023/095791

(57) **Abstract**

The present invention aims to provide an electrode catalyst that has high activity and excellent electric conductivity as a catalyst for anode in water electrolysis cell.

According to the present invention, provided is an electrode catalyst, comprising: a support powder; and active particles supported on the support powder, wherein: the support powder is an aggregate of support fine particles having a chained portion structured by a plurality of crystallites being fusion-bonded to form a chain; the support fine particles contain a metal oxide doped with a dopant element; the metal oxide contains tin as a main element; the active particles contain a platinum group oxide containing a platinum group element; and a loading ratio of the active particles is 25 mass% or higher.

## Description

### Technical Field

The present invention relates to an electrode catalyst, and a water electrolysis cell using the catalyst.

### Background Art

Patent Literature 1 discloses a catalyst for water electrolysis, in which active particles containing platinum or iridium are supported on a support containing tin oxide doped with a pentavalent metal.

### Citation List

### Patent Literature

[Patent Literature 1] JP-A-2016-047524

### Summary of Invention

### Technical Problem

The catalyst of the Patent Literature 1 has excellent activity, but its electric conductivity is not high enough. For this reason, it is desired to improve the electric conductivity of the catalyst in order to reduce the internal resistance of a water electrolysis cell.

The present invention has been made by taking these circumstances into consideration. The present invention aims to provide an electrode catalyst having high activity and excellent electric conductivity as an anode catalyst for a water electrolysis cell.

### Solution to Problem

The present inventors have conducted intensive research, and have found that the electric conductivity of the catalyst is remarkably improved by increasing the loading ratio of the active particles to 25 mass% or higher, thereby leading to completion of the present invention.

According to the present invention, the following inventions are provided.
[1] An electrode catalyst, comprising: a support powder; and active particles supported on the support powder, wherein: the support powder is an aggregate of support fine particles having a chained portion structured by a plurality of crystallites being fusion-bonded to form a chain; the support fine particles contain a metal oxide doped with a dopant element; the metal oxide contains tin as a main element; the active particles contain a platinum group oxide containing a platinum group element; and a loading ratio of the active particles is 25 mass% or higher.
[2] The electrode catalyst of [1], wherein the ratio of a halogen element with respect to the platinum group element in the active particles is 2.0 atomic% or lower.
[3] The electrode catalyst of [1] or [2], wherein electric conductivity of the electrode catalyst is 0.5 S/cm or higher.
[4] The electrode catalyst of any one of [1] to [3], wherein a ratio of tin with respect to the entire main element contained in the metal oxide is 50 atomic% or higher.
[5] The electrode catalyst of any one of [1] to [4], wherein a ratio of iridium with respect to the entire platinum group element contained in the platinum group oxide is 50 atomic% or higher.
[6] The electrode catalyst of any one of [1] to [5], wherein the loading ratio is 30 mass% or higher.
[7] The electrode catalyst of any one of [1] to [6], wherein the active particles have a crystallite diameter of 2 to 10 nm, the crystallite diameter determined from an XRD pattern.
[8] A water electrolysis cell comprising: a cathode; an anode; and a proton-conducting polymer electrolyte membrane arranged therebetween, wherein the anode comprises a catalyst layer structured with the electrode catalyst of any one of [1] to [7].

### Brief Description of Drawings

Fig. 1 shows a model diagram of a catalyst structure of an electrode catalyst 100.
Fig. 2 shows a view in which support fine particles 150 are taken from Fig. 1.
Fig. 3 shows a condition of a branch 160 of the support fine particles 150 of Fig. 1.
Fig. 4 shows a configuration of an apparatus for water electrolysis apparatus 10.
Fig. 5 shows a sectional view which is cut through a center of a burner 2 of a manufacturing apparatus 1 for manufacturing a support powder.
Fig. 6 shows an enlarged view of a region X in Fig. 5.
Fig. 7 shows a sectional view taken along a line A-A of Fig. 5.
Fig. 8 shows an enlarged view of a region Y in Fig. 7.
Fig. 9 is a graph showing electric conductivity of the catalyst of Examples and Comparative Examples.
Fig. 10A is an electron microscopy image of the catalyst of Example 1.
Fig. 10B is an electron microscopy image of the catalyst of Example 4.
Fig. 11 is a graph showing OER activity of the catalyst of Examples and a commercial IrOx catalyst.
Figs. 12A and 12B show the result of XPS measurement of the catalyst of Example 1. Fig. 12A and 12B show the results for Ir and Cl, respectively.
Fig. 13A shows the XRD patterns measured for various samples.
Fig. 13B shows an enlarged view of the XRD patterns of the area around 40° in Fig. 13A.

### Description of Embodiments

Hereinafter, embodiments of the present invention will be explained with reference to the drawings. Various distinctive features shown in the following embodiments can be combined with each other. In addition, an invention can be established independently for each of the distinctive features.

### 1. Electrode Catalyst 100

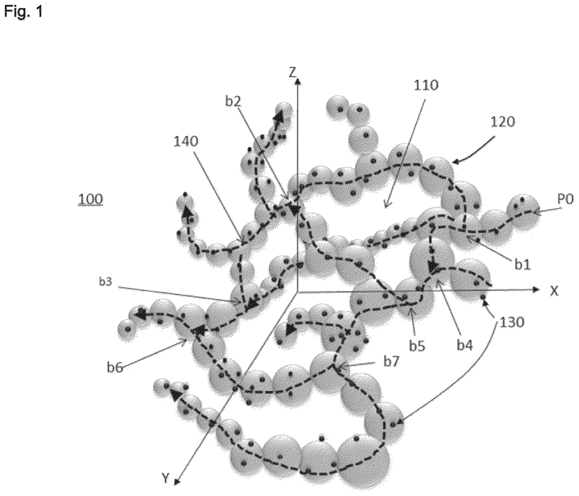

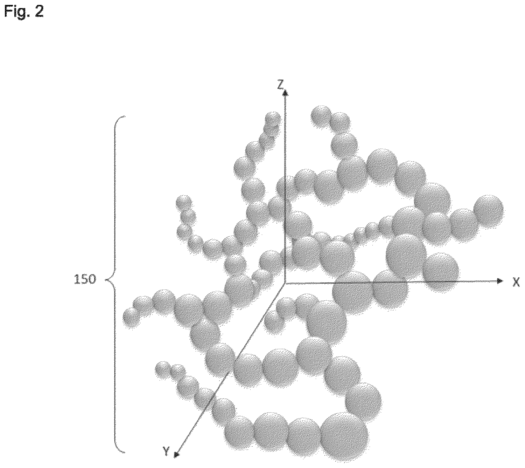

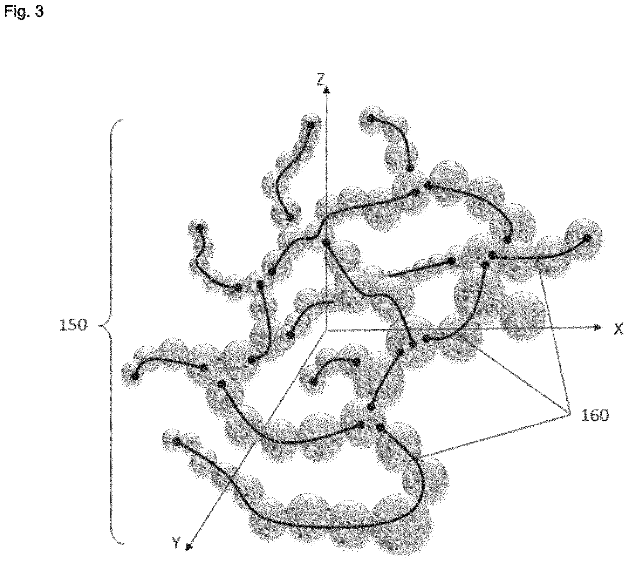

As shown in Figs. 1 to 4, the electrode catalyst 100 comprises a support powder and active particles 130 supported on the support powder. The support powder is an aggregate of support fine particles 150 having a chained portion structured by fusion-bonding a plurality of crystallites 120 into a chain. Hereinafter, each constitution will be explained.

### 1-1. Support Fine Particles 150 and Support Powder

As shown in Figs. 1 to 3, in the support fine particles 150, a three-dimensional void 110 surrounded by a branch 160 and pores existing between a plurality of branches is formed. Here, a plurality of crystallites 120 structuring the support fine particles 150 is fusion-bonded to form a chained portion, thereby forming the branch 160.

As shown in Figs. 1 to 3 as an example of structure model of the electrode catalyst, the support fine particles 150 comprise four pores of a first pore surrounded by points b1, b2, b5, b4, and b1, where the branches link with each other (may be referred to as branching points, or merely as branch); a second pore surrounded by branching points b1, b2, b3, and b1; a third pore surrounded by branching points b2, b3, b6, b7, b5, and b2; and a fourth pore surrounded by branching points b1, b3, b6, b7, b5, b4, and b1. Here, when a plane surrounded by the branching points of each of the pores (first to fourth pores) is taken as the pore plane, the void 110 is a three-dimensional space surrounded by the four pore planes. The support fine particles 150 comprise a plurality of pores surrounded by a plurality of branching points in which a plurality of branches link with each other. Further, the three-dimensional spaces (voids) which are surrounded by the plurality of pores are provided sequentially, thereby structuring the support fine particles.

Here, as a simple structure of the support fine particles 150, the support fine particles can have only one pore (for example, the first pore surrounded by the branching points b1, b2, b5, b4, and b1). In such a case, a void 110 having a thickness of the crystallite grain of the crystallite 120 is provided. As a simpler structure, the support fine particles 150 can have one or more branches. In such a case, the branches within the support fine particles 150 prohibits cohesion of the support fine particles, thereby providing the void 110 between the support fine particles.

Here, the "pore" mentioned above can also be mentioned as closed curve (closed loop). Otherwise, it can be said that a void 110 surrounded by a closed plane including the aforementioned plurality of branching points (for example, branching points b1 to b7) is provided. As the branching points b1 to b7, the center of gravity of the crystallite of the metal oxide structuring the support fine particles 150 in which the branches connect with each other can be taken as the branching point, or an arbitrary point in the crystallite can be taken as the branching point.

The size of the crystallite 120 is preferably 10 to 30 nm, more preferably 10 to 15 nm. The size is, particularly for example, 10, 11, 12, 13, 14, 15, 16, 17, 18, 19, 20, 25, or 30 nm, and may be in the range between the two values exemplified herein. The size of the crystallite 120 (crystallite diameter) can be obtained in accordance with Sheller formula using half-width in the XRD pattern peak. If the crystallite 120 is too small, the oxide may be easily eluted and durability of the catalyst may decrease. If the crystallite 120 is too large, a secondary pore volume may become small and the diffusion of materials may decrease.

The aggregate of the support fine particles 150 is in the form of a powder. Such aggregate is referred to as "support powder".

The average particle size of the support fine particles 150 in the support powder is preferably 0.1 um to 4 µm, and more preferably 0.5 um to 2 um. The average particle size of the support fine particles 150 can be measured with a laser diffraction/scattering particle size distribution analyzer.

The BET specific surface area of the support powder is preferably 12 m²/g or larger, and is more preferably 25 m²/g or larger. The BET specific surface area is, for example, 12 to 100 m²/g, particularly for example, 12, 15, 20, 25, 30, 35, 40, 45, 50, or 100 m²/g, and may be in the range between the two values exemplified herein.

The support powder preferably has a void fraction of 50% or higher, more preferably 60% or higher. The void fraction is, for example, 50 to 80%, particularly for example, 50, 55, 60, 65, 70, 75, or 80%, and may be in the range between the two values exemplified herein. The void fraction can be obtained by mercury intrusion method or FIB-SEM.

The support powder preferably has a repose angle of 50 degrees or less, and more preferably a repose angle of 45 degrees or less. In such a case, the support powder has a similar flowability as flour, and thus handling is simple. The repose angle is, for example, 20 to 50 degrees, particularly for example, 20, 25, 30, 35, 40, 45, or 50 degrees, and may be in the range between the two values exemplified herein. The repose angle can be obtained by a drop volume method.

The electric conductivity of the support powder is preferably 0.001 S/cm or higher, and more preferably 0.01 S/cm or higher. The electric conductivity is, for example, 0.01 to 1000 S/cm, particularly for example, 0.01, 0.1, 1, 10, 100, or 1000 S/cm, and may be in the range between the two values exemplified herein. The electric conductivity can be measured in accordance with the JIS standard (JIS K 7194) .

The support fine particles 150 have a branch 160 comprising a chained portion which is structured by fusion-bonding a plurality of crystallites 120 into a chain. The branch 160 itself has a nature to allow electrons to flow. As shown in Figs. 1 to 3, the support fine particles 150 have a plurality of branches 160, and the branches connect with each other at branching points (b1 to b7), by which a network is structured. Electrically conductive nature can be seen among these. Accordingly, the branches 160 of the support fine particles 150 shown by the dotted line from point P0 in Fig. 1 itself structures an electron conduction route (electron conduction pathway) 140.

The support fine particles 150 contain a metal oxide that is doped with a dopant element. The support fine particles 150 is preferably structured solely with the metal oxide, but may contain a small amount of other components. The ratio of the metal oxide in the support fine particles 150 is, for example, 90 to 100 mass%, particularly for example, 90, 91, 92, 93, 94, 95, 96, 97, 98, 99, or 100 mass%, and may be in the range between the two values exemplified herein.

The dopant element is an element having a different valence from a main element. The main element includes tin, and may include elements such as titanium, cerium, and zirconium. Examples of the dopant element include the elements that have at least partially a valence of five or more, and specifically, at least one is selected among rare earth elements represented by yttrium, Group 5 elements represented by niobium and tantalum, Group 6 elements represented by tungsten, and Group 15 elements represented by antimony. The term "at least partially a valence of five or more" means that some or all of the dopant elements have a valence of five or more, and some of the dopant elements may have a valence of four or less. When doping is performed with such elements, the support fine particles can be imparted with the electric conductivity. Among such elements, Group 5 elements represented by niobium and tantalum, Group 6 elements represented by tungsten, or Group 15 elements represented by antimony are preferred, and tantalum, niobium, antimony or tungsten are particularly preferred.

The ratio of the dopant element with respect to the entire metal contained in the metal oxide is preferably 1 to 30 atomic%. In such a case, the electric conductivity of the electrode catalyst 100 becomes particularly high. The ratio is, particularly for example, 1, 5, 10, 15, 20, 25, or 30 atomic%, and may be in the range between the two values exemplified herein.

The ratio of tin with respect to the entire main element contained in the metal oxide is preferably 50 atomic% or higher. In such a case, the electric conductivity of the electrode catalyst 100 becomes particularly high. The ratio is, for example, 50 to 100 atomic%, particularly for example, 50, 55, 60, 65, 70, 75, 80, 85, 90, 95 or 100 atomic%, and may be in the range between the two values exemplified herein.

### 1-2. Active Particles 130

The active particles 130 are particles which can serve as a catalyst (preferably, a catalyst for anode reaction in water electrolysis cell). The active particles 130 contain a platinum group oxide which contains a platinum group element. The active particles 130 are preferably structured solely with the platinum group oxide, but may contain a small amount of another component. The ratio of the platinum group oxide in the active particles 130 is, for example, 90 to 100 mass%, particularly for example, 90, 91, 92, 93, 94, 95, 96, 97, 98, 99, or 100 mass%, and may be in the range between the two values exemplified herein.

Examples of the platinum group element include ruthenium, rhodium, palladium, osmium, iridium, and platinum. The platinum group oxide contains one or more of these elements. From the perspective of catalytic activity, the platinum group oxide preferably contains iridium, and more preferably, the ratio of iridium with respect to the entire platinum group element in the platinum group oxide is 50 atomic% or higher. The ratio is, for example, 50 to 100 atomic%, particularly for example, 50, 55, 60, 65, 70, 75, 80, 85, 90, 95, or 100 atomic%, and may be in the range between the two values exemplified herein.

The platinum group oxide is an oxide of the platinum group element. The platinum group element in the platinum group oxide has, in one example, a mixed valence of tetravalent and trivalent. If the platinum group element is expressed as M (=Ru, Rh, Pd, Os, Ir, Pt), the platinum group oxide can be expressed as MOx. For example, x is 1.4 to 2.0, and preferably 1.6 to 2.0. Particularly, x is 1.4, 1.5, 1.6, 1.7, 1.8, 1.9, or 2.0, and may be in the range between the two values exemplified herein.

The active particles 130 may contain a halogen element. However, the presence of the halogen element at the active points on the surface of the active particles 130 may reduce the activity of the active particles 130. Therefore, the active particles 130 preferably contain a small amount of the halogen element. Particularly, the ratio of the halogen element with respect to the platinum group element in the active particles 130 is preferably 2.0 atomic% or lower. The ratio is, for example, 0 to 2.0 atomic%, particularly for example, 0.001, 0.01, 0.1, 0.2, 0.3, 0.4, 0.5, 0.6, 0.7, 0.8, 0.9, 1.0, 1.5, or 2.0 atomic%, and may be in the range between the two values exemplified herein. Examples of the halogen element include fluorine, chlorine, bromine, and iodine. The ratio of the halogen element with respect to the platinum group element can be calculated based on the ratio of peak area by XPS analysis.

The loading ratio of the active particles 130 is 25 mass% or higher, and more preferably 30 mass% or higher. When the loading ratio of the active particles 130 is 25 mass% or higher, the electric conductivity of the electrode catalyst 100 becomes prominently high, and when the loading ratio is 30 mass% or higher, the electric conductivity of the electrode catalyst 100 becomes even more prominently high. The loading ratio can be calculated by (mass of the active particles 130) / (mass of the electrode catalyst 100).The loading ratio can be calculated by calculating the concentration of the platinum group element (mass%) by ICP analysis, and converting the concentration of the platinum group element to that of the platinum group oxide, assuming that the platinum group element is tetravalent oxide. The loading ratio is, for example, 25 to 75 mass%, particularly for example, 25, 30, 35, 40, 45, 50, 55, 60, 65, 70, or 75 mass%, and may be in the range between the two values exemplified herein.

The active particles 130 have a crystallite diameter of 2 to 10 nm, which is determined from XRD pattern. When the crystallite diameter is too small, the active particles 130 easily dissolve as an electrode reaction proceeds. If the crystallite diameter is too large, an electrochemically active surface area becomes small, and thus a desired electrode performance cannot be achieved. The crystallite diameter is, particularly for example, 2, 3, 4, 5, 6, 7, 8, 9, or 10 nm, and may be in the range between the two values exemplified herein. The crystallite diameter can be obtained in accordance with Sheller formula using half-width in the XRD pattern peak.

For the active particles 130, defining a peak intensity of (111) plane in the XRD pattern as I1 and a peak intensity of (200) plane as I2, I1/I2≥2 is preferred, I1/I2≥5 is more preferred, and I1/I2≥7 is even more preferred. Since the (111) plane of the active particles 130 is more catalytically active than the (200) plane, the larger the value of I1/I2, the higher the catalytic activity. Also, since the (111) plane has a lower surface energy than the (200) plane, the higher the loading ratio of the active particles 130, the more preferentially the (111) plane that has a smaller surface energy is formed, resulting in a larger I1/I2 value. Therefore, by increasing the loading ratio of the active particles 130, the value of I1/I2 can be increased. The value of I1/I2 is, for example, 2 to 15, specifically for example, 2, 3, 4, 5, 6, 7, 8, 9, 10, 11, 12, 13, 14 or 15, and may be in the range between the two values exemplified herein, or equal to or larger than any one of the values exemplified herein. In the present specification, a peak intensity ratio means an intensity ratio at a peak top.

### 3. Electrode Catalyst 100

In the electrode catalyst 100 of the present embodiment, a low-resistance region is easily formed in the vicinity of the area where the active particles 130 are supported, due to the electron donation to the support powder from the active particles 130 supported onto the support powder. Furthermore, as the electrode catalyst 100 of the present embodiment has high loading ratio of the active particles 130, the low-resistance regions formed in the vicinity of each of the adjacent active particles 130 are connected, or else the distance between the adjacent low-resistance regions is shortened, which leads to increased electric conductivity of the electrode catalyst 100. In addition, as the loading amount of the active particles 130 becomes higher, adjacent active particles 130 tend to self-assemble and connect with each other. In this respect, the electrode catalyst 100 also tends to have a higher electric conductivity. Therefore, the electric conductivity of the electrode catalyst 100 is preferably 0.5 S/cm or higher. In this case, the internal resistance of the water electrolysis cell configured with the electrode catalyst 100 is particularly low. This electric conductivity is 0.5 to 1000 S/cm, particularly for example, 0.5, 0.6, 0.7, 0.8, 0.9, 1, 2, 3, 4, 5, 6, 7, 8, 9, 10, 100, 1000 S/cm, and may be in the range between the two values exemplified herein, or equal to or larger than any one of the values exemplified herein. The electric conductivity can be measured according to JIS standard (JIS K 7194).

### 3. Water Electrolysis Apparatus

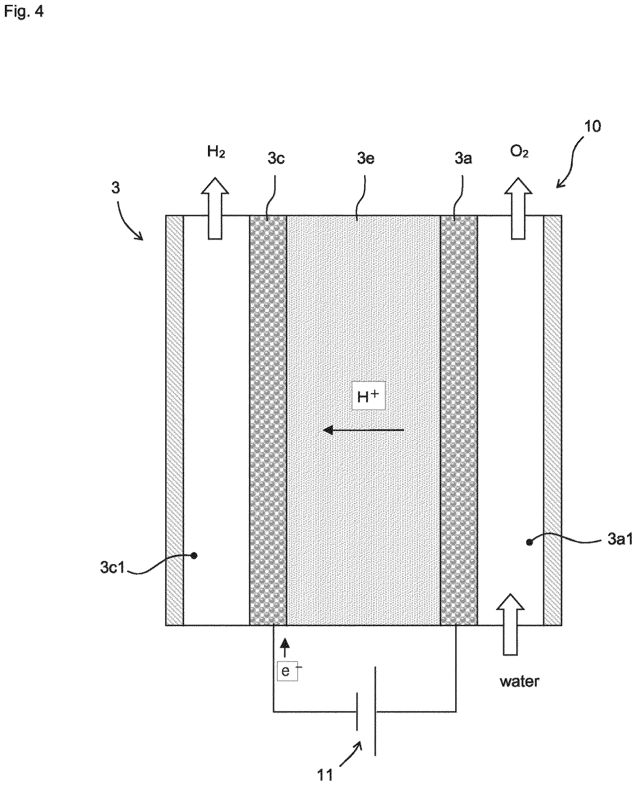

As shown in Fig. 4, a water electrolysis apparatus 10 of an embodiment of the present invention comprises a DC voltage source 11 and a water electrolysis cell 3. The water electrolysis cell 3 comprises an anode 3a, a cathode 3c, and a proton-conducting polymer electrolyte membrane 3e arranged therebetween. The DC voltage source 11 is configured to apply a DC voltage between the anode 3a and the cathode 3c. The DC voltage source 11 applies voltage to move electrons from the anode 3a toward the cathode 3c. An anode distribution pathway 3a1 is provided adjacent to the anode 3a. A cathode distribution pathway 3c1 is provided adjacent to the cathode 3c.

At the anode 3a and the cathode 3c, an anode reaction and a cathode reaction described below occur. Specifically, water supplied to the anode 3a through the anode distribution pathway 3a1 is electrolyzed to generate oxygen from the anode 3a and hydrogen from the cathode 3c. Oxygen is emitted from the anode distribution pathway 3a1, and hydrogen is emitted from the cathode distribution pathway 3c1. Protons are transferred from the anode 3a to the cathode 3c through polymer electrolyte membrane 3e.
(Anode reaction) 2H₂O → 4H⁺ + O₂ + 4e⁻
(Cathode reaction) 4H⁺ + 4e⁻ → 2H₂

As a catalyst for the anode 3a, the electrode catalyst 100 of the present embodiment can be used. As a catalyst for the cathode 3c, platinum, platinum alloys or the like can be used.

### 3. Method for Manufacturing Support Powder

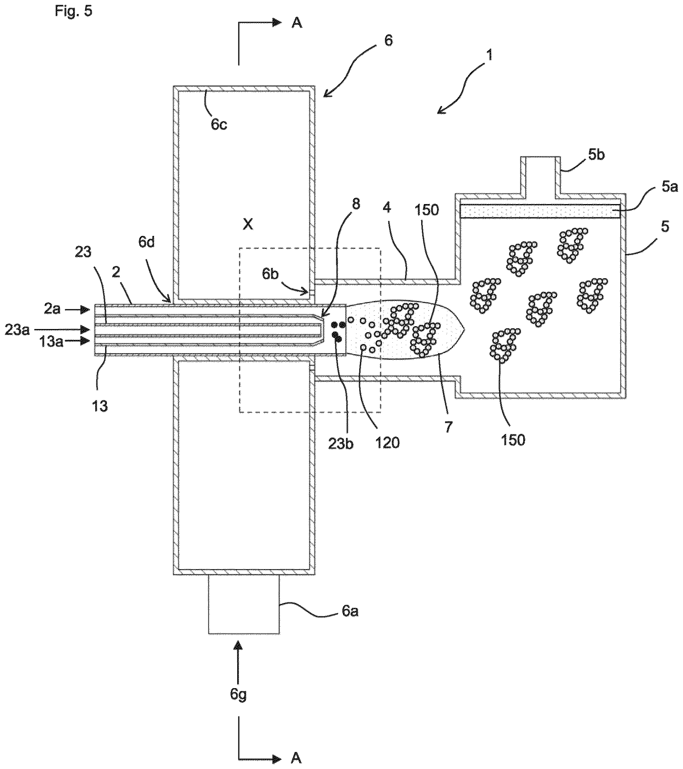

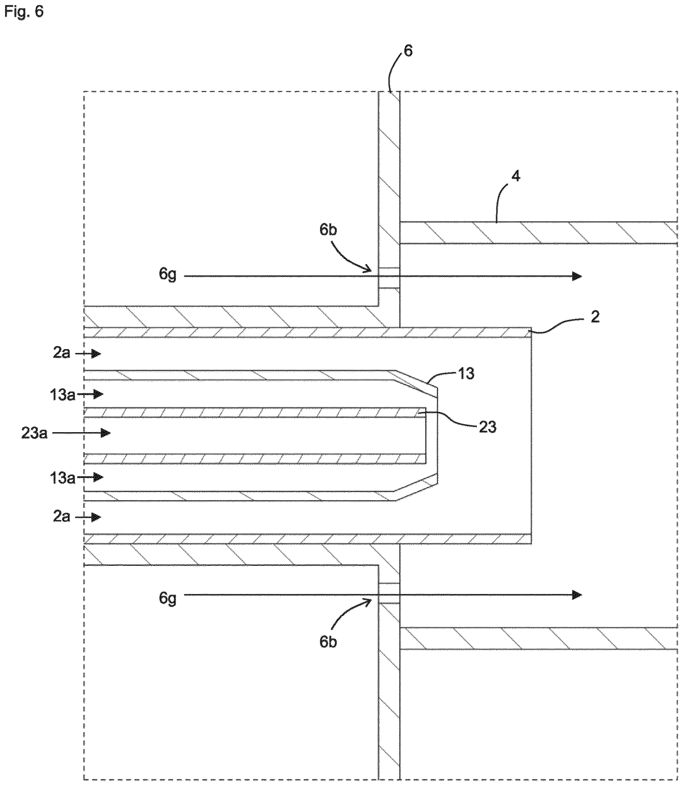

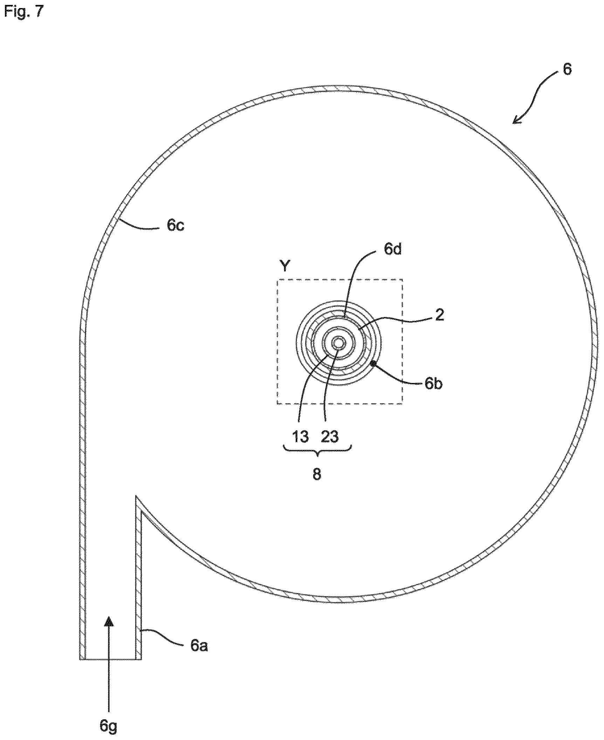

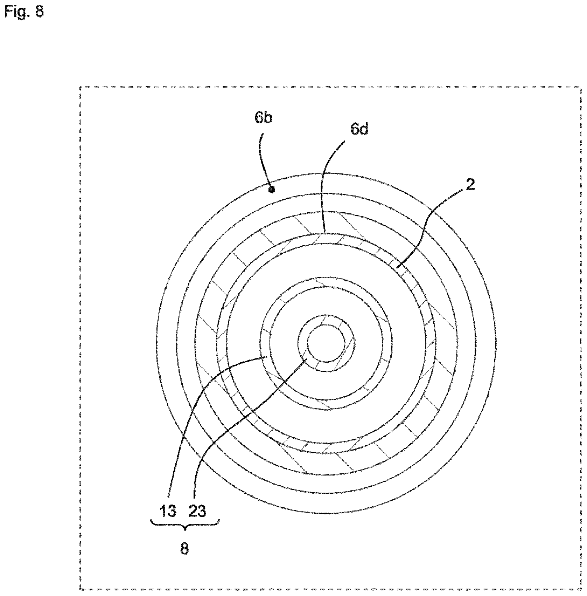

First, referring to Fig. 5 to Fig. 8, the manufacturing apparatus 1 which can be used for manufacturing the support powder is explained. The manufacturing apparatus 1 comprises a burner 2, a raw material supplying unit 8, a reaction cylinder 4, a collector 5, and a gas reservoir 6. The raw material supplying unit 8 comprises an outer cylinder 13, and a raw material distribution cylinder 23.

The burner 2 is a cylinder, and the raw material supplying unit 8 is arranged in the burner 2. Burner gas 2a is distributed between the burner 2 and the outer cylinder 13. The burner gas 2a is used to form a flame 7 at the tip of the burner 2 by ignition. A high temperature region having a temperature of 1000°C or higher is formed by the flame 7. The burner gas 2a preferably contains a combustible gas such as propane, methane, acetylene, hydrogen, or nitrous oxide. In one example, a gas mixture of oxygen and propane can be used as the burner gas 2a. The temperature of the high temperature region is 1000 to 2000°C for example, particularly for example, 1000, 1100, 1200, 1300, 1400, 1500, 1600, 1700, 1800, 1900, or 2000°C, and may be in the range between the two values exemplified herein.

A raw material solution 23a for generating the support powder is distributed in the raw material distribution cylinder 23. As the raw material solution 23a, the one containing a metal compound is used. As the metal compound, fatty acid metals (Sn, Ti, Ce, Sb, Nb, Ta, W, etc.) can be mentioned for example. The number of carbon atoms in the fatty acid is, for example, 2 to 20, preferably 4 to 15, and more preferably 6 to 12. As the fatty acid metal salt, metal octylates (tin octylate, titanium octylate, cerium octylate, antimony octylate, niobium octylate, tantalum octylate, tungsten octylate, etc.) are preferred. In the raw material solution 23a, the metal compound is preferably dissolved or dispersed in a non-aqueous solvent.

A mist gas 13a used for converting the raw material solution 23a into a mist is distributed in between the outer cylinder 13 and the raw material distribution cylinder 23. When the mist gas 13a and the raw material solution 23a are jetted together from the tip of the raw material supplying unit 8, the raw material solution 23a is converted into a mist. The mist 23b of the raw material solution 23a is sprayed into the flame 7, and the metal compound in the raw material solution 23a undergoes a thermal decomposition reaction in the flame 7. Accordingly, support powder which is an aggregate of support fine particles 150 having a chained portion structured by fusion-bonding the crystallite 120 into a chain is generated. The mist gas 13a is oxygen in one example.

The reaction cylinder 4 is provided between the collector 5 and the gas reservoir 6. The flame 7 is formed in the reaction cylinder 4. The collector 5 is provided with a filter 5a and a gas discharging portion 5b. A negative pressure is applied to the gas discharging portion 5b. Accordingly, a flow which flows towards the gas discharging portion 5b is generated in the collector 5 and the reaction cylinder 4.

The gas reservoir 6 has a cylinder shape, and comprises a cold gas introducing portion 6a and a slit 6b. A cold gas 6g is introduced from the cold gas introducing portion 6a into the gas reservoir 6. The cold gas introducing portion 6a is directed in a direction along the tangential line of the inner peripheral wall 6c of the gas reservoir 6. Therefore, the cold gas 6g introduced through the cold gas introducing portion 6a into the gas reservoir 6 revolves along the inner peripheral wall 6c. At the center of the gas reservoir 6, a burner insertion hole 6d is provided. The burner 2 is inserted through the burner insertion hole 6d. The slit 6b is provided in the vicinity of the burner insertion hole 6d to surround the burner insertion hole 6d. Accordingly, when the burner 2 is inserted through the burner insertion hole 6d, the slit 6b is provided to surround the burner 2. The cold gas 6g in the gas reservoir 6 is driven by the negative pressure applied to the gas discharging portion 5b, and is discharged from the slit 6b towards the reaction cylinder 4. The cold gas 6g can be any gas so long as it can cool the oxide generated, and is preferably an inert gas, for example, air. The flow speed of the cold gas 6g is preferably two times or more of the flow speed of the burner gas 2a. The upper limit of the flow speed of the cold gas 6g is not particularly limited, and is 1000 times the flow speed of the burner gas 2a for example. The ratio of flow speed of cold gas 6g/flow speed of burner gas 2a is 2 to 1000 for example, and the ratio is particularly for example, 2, 5, 10, 15, 20, 25, 30, 35, 40, 45, 50, 100, 200, 500, or 1000, and may be in the range between the two values exemplified herein. Here, in the present embodiment, a negative pressure is applied to the gas discharging portion 5b to allow the cold gas 6g to flow. However, a positive pressure can be applied to the gas introducing portion 6a to allow the cold gas 6g to flow.

In the present embodiment, since the cold gas 6g is supplied to the surroundings of the flame 7 through the slit 6b, the cold gas 6g flows around the flame 7 in a laminar flow. For this reason, the mist 23b, the crystallites 120, and the support fine particles 150 are not disturbed by the cold gas 6g and are fully heated by the flame 7 while moving along the flame 7, by which the reaction proceeds. Furthermore, since the support fine particles 150 are cooled by the cold gas 6g immediately after the support fine particles 150 get out of the flame 7, the structure having the chained portion is maintained. The cooled support fine particles 150 are captured and collected by the filter 5a.

In the present embodiment, the support powder which is an aggregate of the support fine particles 150 can be manufactured by using the manufacturing apparatus 1. Here, a high-temperature region of 1000°C or higher is formed at the tip of the burner 2 by the flame 7, and the metal compound is allowed to undergo a thermal decomposition reaction in this high-temperature region while supplying the cold gas 6g through the slit 6b to the surroundings of the high-temperature region. The high-temperature region can be formed by plasma instead of the flame 7.

### 4. Method for Manufacturing Electrode Catalyst 100

The method for manufacturing the electrode catalyst 100 comprises a support powder generating step, a colloidal adsorption step, and a heat treatment step.

### <Support Powder Generating Step>

In the support powder generating step, the support powder is generated by the above-mentioned method.

### <Colloidal Adsorption Step>

In the colloidal adsorption step, the platinum group colloidal particles are adsorbed onto the support powder. More specifically, the platinum group colloidal particles fabricated by the colloidal method are dispersed in an aqueous solution to prepare a dispersion, and then the support powder is added and mixed in the dispersion. Accordingly, the colloidal particles are adsorbed onto the surface of the support powder. The support powder having the colloidal particles adsorbed thereon is then filtered and dried, thereby being separated from the dispersion medium. In one example, the platinum group colloidal particles can be fabricated by adding a reducing agent to a solution containing a colloidal precursor that contains platinum group element and by reducing the precursor, but the colloidal precursor containing platinum group element may be used as it is as the platinum group colloidal particles.

### <Heat Treatment Step>

In the heat treatment step, heat treatment is performed after the adsorbing step to oxidize and convert the platinum group colloidal particles into the active particles 130. The temperature of the heat treatment is, for example, 150 to 750°C, particularly for example, 500, 550, 600, 650, 700, or 750°C, and may be in the range between the two values exemplified herein.

The heat treatment duration time is, for example, 0.1 to 20 hours, and preferably 0.5 to 5 hours. The heat treatment duration time is, particularly for example, 0.1, 0.5, 1, 2, 3, 4, 5, 6, 7, 8, 9, 10, 15, or 20 hours, and may be in the range between the two values exemplified herein.

The heat treatment can be carried out under an inert gas atmosphere such as nitrogen.

### Examples

The electrode catalyst was manufactured in accordance with the method described below, and various evaluations were performed.

### 1. Manufacture of Electrode Catalyst 100

### <Example 1>

### (Manufacture of Support Powder)

By using the manufacturing apparatus 1 shown in Figs. 5 to 8, support powder was manufactured. As the burner gas 2a, gas prepared by blending 5 L/min of oxygen and 1 L/min of propane gas was used. This gas was ignited to form a flame (chemical flame) 7 of 1600°C or higher at the tip of the burner 2. The raw material solution 23a was prepared by blending tin octylate and antimony octylate by a molar ratio of 0.95:0.05, and then the blend was further combined with mineral spirit terpen and dissolved. Oxygen was used as the mist gas 13a. 9 L/min of the mist gas 13a and 3 g/min of the raw material solution 23a were blended and sprayed from the tip of the raw material supplying unit 8 which is a spray nozzle (atomizer) towards the center portion of the flame, thereby allowing combustion of the blend and generation of the support powder which is an aggregate of the support fine particles 150. During such, negative pressure was applied to the gas discharging portion 5b to suction air from slit 6b at a flow rate of 170 L/min, thereby collecting the generated support powder in the collector 5 (with filter 5a) . The raw material supplying unit 8 comprises a double tube structure (overall length of 322.3 mm). Oxygen is supplied from the outer cylinder 13, and the raw material solution 23a is supplied to the raw material distribution cylinder 23. At the tip of the raw material distribution cylinder 23, a fluid nozzle and an air nozzle are provided, and the raw material solution 23a was converted into the mist 23b at this position. The amount of the support powder collected was 10 g or more when the operation was carried out for 60 minutes.

### (Support of Active Particles 130)

Subsequently, the active particles 130 were supported onto the support powder.

### <Colloidal Adsorption Step>

First, 4.5 mL of iridium chloride acid solution (TANAKA Precious Metals, 100g/L) was dissolved in 500 ml of ultrapure water, and then 7.2 g of sodium hydrogen sulfite (Kanto Chemical) as reducing agent was added and stirred to form the colloidal particles.

The solution was diluted with 150 mL of water, and sodium hydroxide (KANTO CHEMICAL CO.,INC.) solution prepared at 5 mass% was added dropwise using an automatic potentiometric titrator (made by KYOTO ELECTRONICS MANUFACTURING CO., LTD, AT-500) to adjust the pH of the precursor solution to 5. Thereafter, 54 mL of hydrogen peroxide (Kanto Chemical, 35%) was added at about 2 mL/min and the pH was readjusted to 5 with NaOH.

To the dispersion, a dispersion prepared by dispersing 0.15 g of the support powder in 15 mL of ultrapure water was added, and the mixture was agitated for 18 hours at 90°C to adsorb the colloidal particles onto the support powder. Then, after cooling to room temperature, the solid contents were filtered out. The solid contents were then washed by super pure water. The washing was performed by repeating the operations of adding 15 mL of ultrapure water to the solid contents, stirring, filtering, and observing whether a white precipitate formed when silver nitrate solution (KANTO CHEMICAL CO.,INC., 1M) was added dropwise onto the filtrate until no white precipitate was observed.

### <Heat Treatment Step>

In the heat treatment step, samples after the washing were heat-treated at 400°C for 2 hours under a nitrogen atmosphere to oxidize the colloidal particles, forming the active particles 130.

The electrode catalyst 100 in which the active particles 130 were supported on the support powder was obtained by the above-mentioned steps.

### <Other Examples and Comparative Examples>

The electrode catalyst 100 was manufactured in the same manner as Example 1, except for altering the loading ratio of the active particles 130 as shown in Table 1.

**[Table 1]**

| Table 1 | Example | | | | Comparative Example | | | | |
|---|---|---|---|---|---|---|---|---|---|
| | 1 | 2 | 3 | 4 | 1 | 2 | 3 | 4 | 5 |
| Loading Ratio (mass%) | 30 | 27 | 35 | 49 | 0 | 8 | 14 | 15 | 20 |
| Electric Conductivity (S/cm) | 1.2 | 0.73 | 1.7 | 7.9 | 0.041 | 0.085 | 0.071 | 0.051 | 0.1 |
| (111)Peak Intensity I1/(200)Peak Intensity I2 of Active Particles | 2 | - | 8.4 | 10.2 | - | - | - | - | - |
| Crystallite Diameter of Active Particles (nm) | 3.0 | - | 3.0 | 3.4 | - | 4.1 | 3.4 | 3.4 | 4.4 |

### 2. Various Measurements

Various measurements were performed on the electrode catalysts of the Examples and Comparative Examples according to the following methods.

### <Measurement of Loading Ratio>

For each catalyst, the concentration of iridium was determined by inductively coupled plasma atomic emission spectroscopy (ICP-AES) measurements, and converted by the concentration of iridium oxide, assuming that iridium is tetravalent oxide. This concentration was used as the loading ratio of the active particles 130.

### <Measurement of Electric Conductivity>

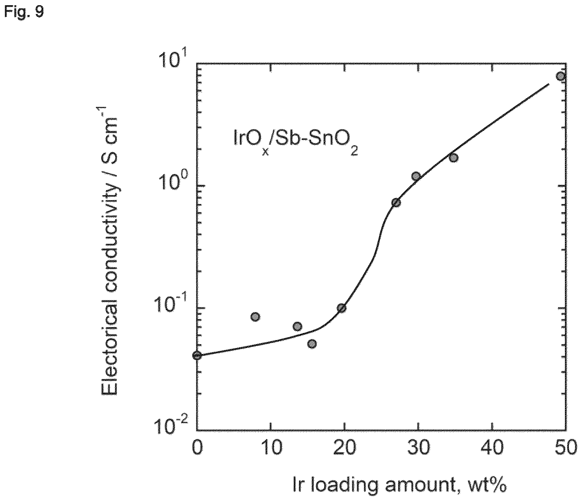

Each catalyst was filled in a uniaxial pressurizing device and a resistance thereof was measured when it was compressed at a pressure of 16 MPa. The measurement was performed for four levels of different amounts of the catalysts, and electric resistances of the catalysts were calculated based on a slope of a straight line obtained from a correlation between the electric resistance obtained and the thickness or weight of the sample. The electric resistances calculated were converted into electric conductivities. The results are shown in Table 1 and Fig. 9.

As shown in Table 1 and Fig. 9, when the loading ratio was 25 mass% or higher, the electric conductivity was prominently high, and when the loading ratio was 30 mass% or higher, the electric conductivity was even more prominently high.

<Electron Microscope Observation>

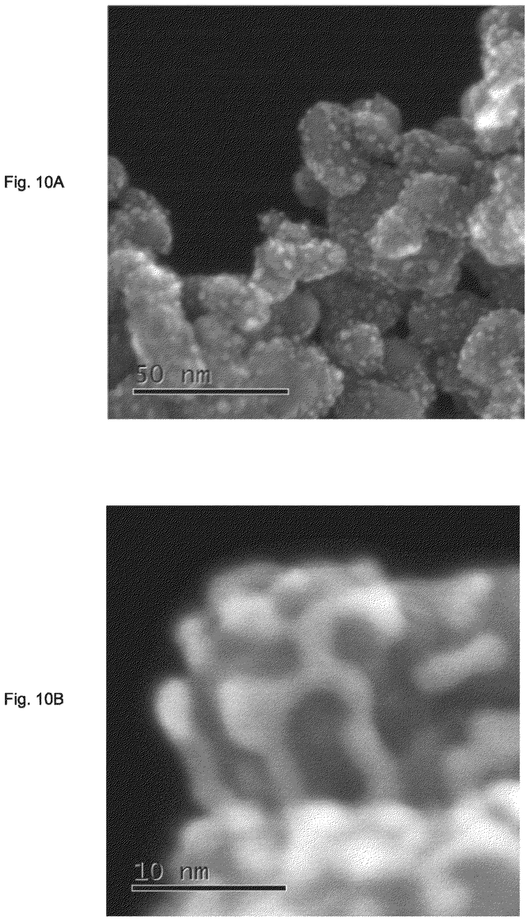

Fig. 10A shows an electron microscopy image of the catalyst of Example 1 observed by an electron microscope. From 10A, it is found that the active particles 130 structured with 3 to 5 nm of iridium oxide particles are supported onto the support powder. An electron microscopy image of the catalyst of Example 4 is shown in Fig. 10B. From Fig. 10B, it is found that adjacent active particles 130 are linked by self-assembly to form a continuous phase.

### <OER (Oxygen Evolution Reaction) activity>

OER activity was measured for the electrode catalyst 100 and a commercial IrOx catalyst (Furuya Metal Co., Ltd.). As OER corresponds to the anode reaction in a water electrolysis cell, the OER activity indicates the activity as an anode catalyst for water electrolysis.

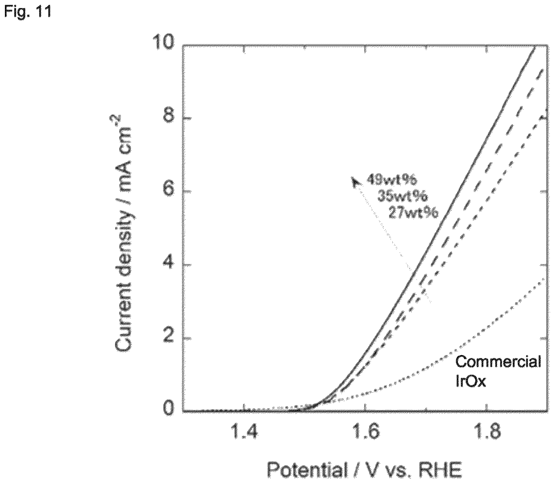

Specifically, Fig. 11 shows a graph showing the change in current density when swept to 2.0V under OER activity test conditions (80°C, in 0.1M HClO4, sweep rate: 10 mV/s) for the electrode catalyst 100 and the commercial catalyst. In Fig.11, 27wt%, 35wt% and 49wt% show the loading ratio of the active particles 130.

As shown in Fig. 11, the electrode catalyst 100 of the present invention has significantly high OER activity compared to the commercial IrOx catalyst.

### <XPS Measurement>

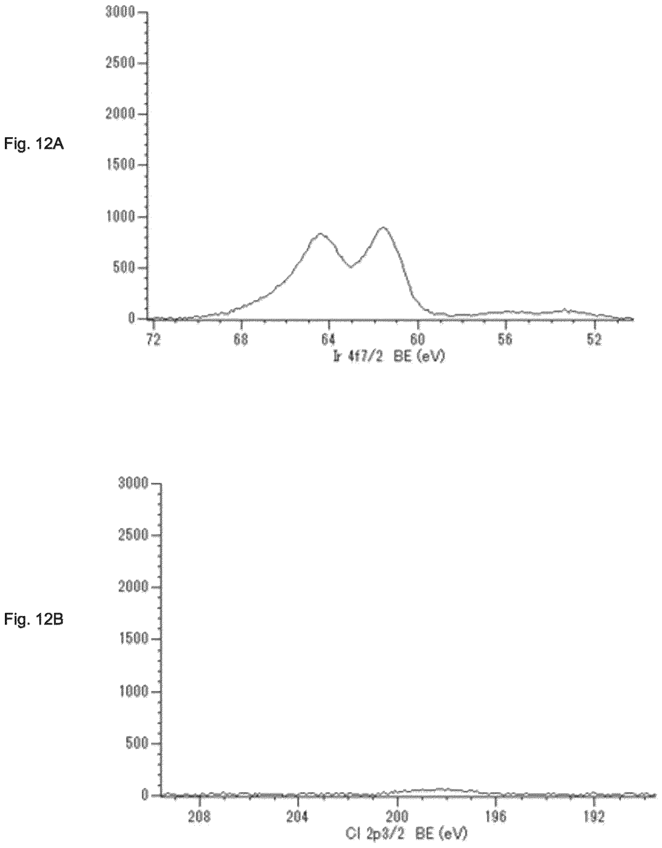

XPS measurement was performed on the catalyst of Example 1. The result is shown in Figs. 12A and 12B. Figs. 12A and12B show the results of the analysis for Ir and Cl, respectively. As shown in Fig. 12B, Cl is almost undetectable, indicating that the ratio of Cl with respect to Ir is 0.1 atomic% or lower.

### <Measurement of Peak Intensity Ratio of Active Particles>

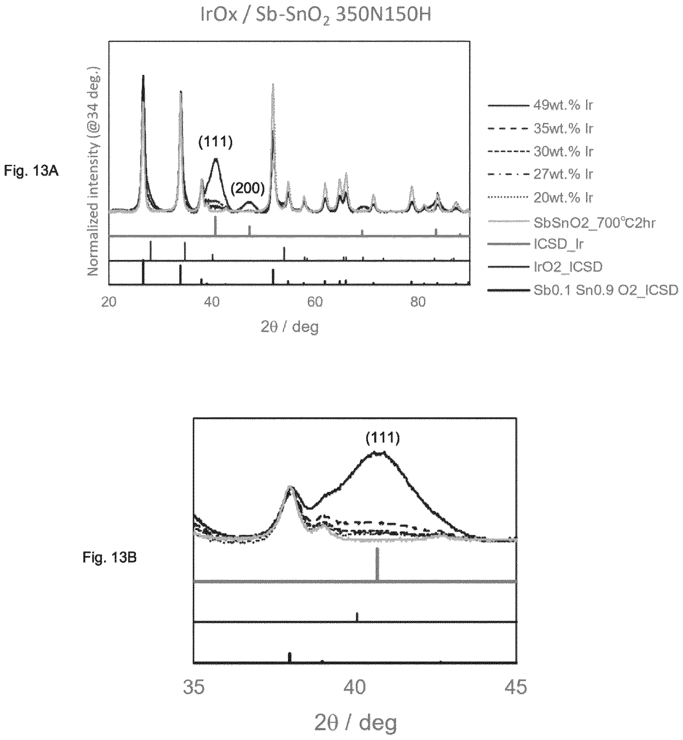

XRD measurements were performed on the electrode catalyst 100 to calculate the intensity ratio of the active particles 130 (= the peak intensity I1 of the (111) plane / the peak intensity I2 of the (200) plane) from the XRD pattern. In addition, the crystallite diameter of the metal fine particles was calculated in accordance with Sheller formula using half-width in the (200) peak. The calculated results are shown in Table 1 and Figs. 13A and 13B. As shown in Table 1 and Figs. 13A and 13B, it is found that the (111) peak intensity I1 increases significantly as the loading ratio of the active particles 130 increases, resulting in a larger peak intensity ratio.

### Reference Signs List

1: manufacturing apparatus,
2: burner,
2a: burner gas,
3: water electrolysis cell,
3a: anode,
3a1: anode distribution pathway,
3c: cathode,
3c1: cathode distribution pathway,
3e: polymer electrolyte membrane,
4: reaction cylinder,
5: collector,
5a: filter,
5b: gas discharging portion,
6: gas reservoir,
6a: cold gas introducing portion,
6b: slit,
6c: inner peripheral wall,
6d: burner insertion hole,
6g: cold gas,
7: flame,
8: raw material supplying unit,
10: water electrolysis apparatus
11: DC voltage source,
13: outer cylinder,
13a: mist gas,
23: raw material distribution cylinder,
23a: raw material solution,
23b: mist,
100: electrode catalyst,
110: void,
120: crystallite,
130: active particles,
150: support fine particles,
160: branch

## Claims

1. An electrode catalyst, comprising:
a support powder; and
active particles supported on the support powder, wherein:
the support powder is an aggregate of support fine particles having a chained portion structured by a plurality of crystallites being fusion-bonded to form a chain;
the support fine particles contain a metal oxide doped with a dopant element;
the metal oxide contains tin as a main element;
the active particles contain a platinum group oxide containing a platinum group element; and
a loading ratio of the active particles is 25 mass% or higher.

2. The electrode catalyst of Claim 1, wherein the ratio of a halogen element with respect to the platinum group element in the active particles is 2.0 atomic% or lower.

3. The electrode catalyst of Claim 1, wherein electric conductivity of the electrode catalyst is 0.5 S/cm or higher.

4. The electrode catalyst of Claim 1, wherein a ratio of tin with respect to the entire main element contained in the metal oxide is 50 atomic% or higher.

5. The electrode catalyst of Claim 1, wherein a ratio of iridium with respect to the entire platinum group element contained in the platinum group oxide is 50 atomic% or higher.

6. The electrode catalyst of Claim 1, wherein the loading ratio is 30 mass% or higher.

7. The electrode catalyst of Claim 1, wherein the active particles have a crystallite diameter of 2 to 10 nm, the crystallite diameter determined from an XRD pattern.

8. A water electrolysis cell comprising:
a cathode; an anode; and a proton-conducting polymer electrolyte membrane arranged therebetween, wherein
the anode comprises a catalyst layer structured with the electrode catalyst of any one of Claims 1 to 7.
